(19) Europäisches Patentamt
European Patent Office
Office européen des brevets

(11) Veröffentlichungsnummer: **0 015 232**
**B1**

# (12) EUROPÄISCHE PATENTSCHRIFT

(45) Veröffentlichungstag der Patentschrift: **18.05.83**

(51) Int. Cl.³: **C 09 B 19/02,** D 06 P 1/42, D 21 H 3/80

(21) Anmeldenummer: **80810024.2**

(22) Anmeldetag: **28.01.80**

(54) **Basische Dioxazinverbindungen, Verfahren zu deren Herstellung sowie deren Verwendung zum Färben und Bedrucken von Textilmaterial, Papier und Leder.**

(30) Priorität: **02.02.79 CH 1041/79**

(43) Veröffentlichungstag der Anmeldung: **03.09.80 Patentblatt 80/18**

(45) Bekanntmachung des Hinweises auf die Patenterteilung: **18.05.83 Patentblatt 83/20**

(84) Benannte Vertragsstaaten: **CH DE FR GB IT**

(56) Entgegenhaltungen:
**CH-A-485 806**
**FR-A-1 117 562**
**FR-A-1 298 841**
**GB-A-850 159**
**GB-A-1 028 916**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Adam, Jean-Marie, Dr., 3, Rue de Montreux, F-68300 Saint-Louis (FR)**
Erfinder: **Galafassi, Pierre, Dr., 12, Rue des Sapins, F-68170 Rixheim (FR)**

**EP 0 015 232 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Basische Dioxazinverbindungen, Verfahren zu deren Herstellung sowie deren Verwendung zum Färben und Bedrucken von Textilmaterial, Papier und Leder

Die neuen basischen Dioxazinverbindungen entsprechend der Formel I

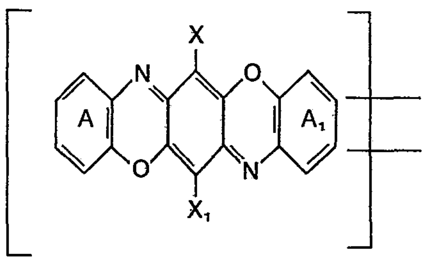

(I)

worin bedeuten:

Z entweder eine basische Gruppe der Formel

a) 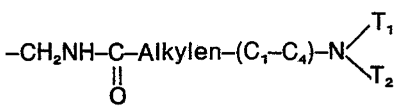

oder

b) 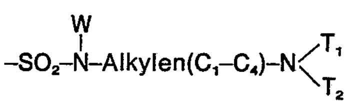

oder

c) 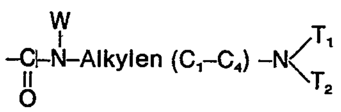

worin bedeuten

$T_1$: H oder einen niedrigmolekularen gegebenenfalls durch Hydroxyl substituierten Alkylrest oder einen gegebenenfalls durch 1 bis 3 Methylreste substituierten Cyclohexylrest oder einen Phenylrest;

$T_2$: einen niedrigmolekularen, gegebenenfalls durch Hydroxyl substituierten Alkylrest; oder die Reste $T_1$ und $T_2$ bilden zusammen mit dem N-Atom einen Pyrrolidin-, Piperidin, Morpholin-, oder Piperazinring;

W: Wasserstoff, eine unsubstituierte Alkylgruppe mit 1 bis 4 Kohlenstoffatomen oder eine durch OH oder Alkoxy ($C_1$–$C_4$) substituierte Alkylgruppe ($C_1$–$C_4$) oder

Z bedeutet eine kationische Gruppe der Formel

a) $-CH_2-NH-CO-alkylen-(C_1-C_4)-K^{\oplus}$ $A^{\ominus}$

worin $K^{\oplus}$ einen Rest der Formeln

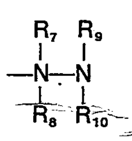 oder 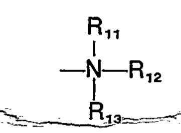

darstellt, worin bedeuten:

$R_7$ und $R_8$ unabhängig voneinander eine Alkylgruppe ($C_1$–$C_4$) oder eine Cycloalkylgruppe oder $R_7$ bildet mit $R_8$ unter Einschluss des N-Atoms einen heterocyclischen Ring;

$R_9$ und $R_{10}$ unabhängig voneinander Wasserstoff, Alkyl $C_1$–$C_4$ oder Cycloalkyl oder ein Acylgruppe;

$R_{11}$ gegebenenfalls substituiertes Alkyl ($C_1$–$C_5$), Cycloalkyl oder Aryl;

$R_{12}$ gegebenenfalls substituiertes Alkyl ($C_1$–$C_4$), Cycloalkyl, Alkoxy oder Aryl; $R_{13}$ einen gegebenenfalls durch OH, $CONH_2$ oder $NH_2$ substituierten $C_1$–$C_2$-Alkylrest; oder $R_7$ und $R_9$ und/oder $R_8$ und $R_{10}$ bilden mit dem N-Atom zusammen einen heterocyclischen Ring oder $R_{11}$ und $R_{12}$ oder $R_{11}$, $R_{12}$ und $R_{13}$ bilden unter Einschluss des N-Atoms einen heterocyclischen Ring; oder Z bedeutet eine kationische Gruppe der Formel

b) 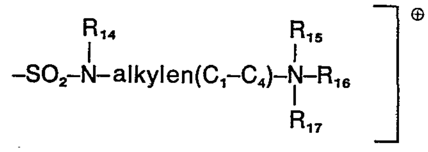 $A^{\ominus}$

worin bedeuten:

«alkylen» eine Alkylenbrücke, welche durch –O–, –S–, –NH– oder 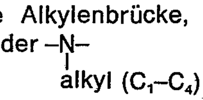 unterbrochen sein kann;

$R_{14}$ Wasserstoff oder einen Alkylrest;

$R_{15}$ und $R_{17}$ je ein Alkylrest ($C_1$–$C_4$) oder ein Cycloalkylrest; $R_{16}$ ein Alkylrest ($C_1$–$C_4$), ein Cycloalkylrest, ein Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring; oder Z bedeutet eine kationische Gruppe der Formel

c) 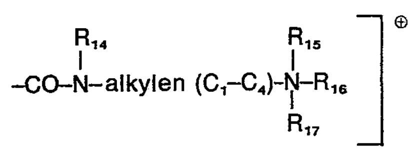 $A^{\ominus}$

worin $R_{14}$ Wasserstoff oder einen Alkylrest;

$R_{15}$ und $R_{17}$ je ein Alkylrest ($C_1$–$C_4$) oder ein Cycloalkylrest; $R_{16}$ ein Alkylrest ($C_1$–$C_4$), ein Cycloalkylrest, ein Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring; und worin $A^{\ominus}$ in allen Fällen ein Anion darstellt;

Y eine anionische Gruppe;

X und $X_1$ unabhängig voneinander gleiche oder verschiedene Substituenten aus der Klasse: Wasserstoff, Halogen, CN, Alkyl ($C_1$–$C_4$); gegebenenfalls substituiertes Phenyl; $NHCOR_1$, worin $R_1$ Alkyl ($C_1$–$C_4$), Cycloalkyl, gegebenenfalls substituiertes Aryl oder einen heterocyclischen Rest darstellt; $OCOR_2$, worin $R_2$ gegebenenfalls substituiertes Alkyl ($C_1$–$C_4$) oder Cycloalkyl bedeutet; oder X und $X_1$ bedeuten die Gruppe

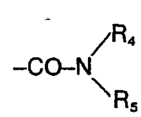

worin $R_4$ und $R_5$ unabhängig voneinander bedeuten: Wasserstoff, Alkyl ($C_1$–$C_4$) gegebenenfalls substituiert durch Aryl vor allem Phenyl oder durch eine basischen Gruppe

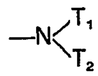

oder kationische Gruppe

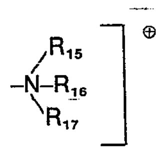

worin $T_1$ H oder einen niedrigmolekularen gegebenenfalls durch Hydroxyl substituierten Alkylrest oder einen gegebenenfalls durch 1 bis 3 Methylreste substituierten Cyclohexylrest oder einen Phenylrest; $T_2$ einen niedrigmolekularen, gegebenenfalls durch Hydroxyl substituierten Alkylrest; ferner können die Reste $T_1$ und $T_2$ zusammen mit dem N-Atom einen Pyrrolidin-, Morpholin-, Piperidin oder Piperazinring bilden, und $R_{15}$ und $R_{17}$ je ein Alkylrest ($C_1$–$C_4$) oder ein Cycloalkylrest; $R_{16}$ ein Alkylrest ($C_1$–$C_4$), ein Cycloalkylrest, ein Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring wie z.B. den gegebenenfalls substituierten Pyridinring; oder $R_4$ und $R_5$ bedeuten Cycloalkyl oder Aryl oder $R_4$ bildet zusammen mit $R_5$ unter Einschluss des N-Atoms einen heterocyclischen Ring wie z.B. den Pyrrolidin-, Piperidin- oder Morpholinring oder X und $X_1$ bedeuten $COOR_6$, worin $R_6$ bedeutet: Wasserstoff, unsubstituiertes Alkyl mit 1 bis 4 C-Atomen oder durch z.B. OH oder Phenyl substituiertes Alkyl oder Cycloalkyl; n die Zahlen von 1 bis 4; m die Zahlen 0 bis 2 mit der Bedingung, dass die Zahl m kleiner ist als n, und worin die Benzorest A und $A_1$ gleich oder verschieden, ein- oder mehrmals substituiert sein können und der Rest Z und Y an den Benzorest A und/oder $A_1$ gebunden ist.

X und $X_1$ in der Bedeutung einer Alkylgruppe stellen eine unverzweigte oder verzweigte Alkylgruppe mit 1 bis 4 Kohlenstoffatomen dar; es handelt sich z.B. um die Methyl-, Äthyl-, n-Propyl-, iso-Propyl- und n-, sec- oder tert.-Butylgruppe; in der Bedeutung einer gegebenenfalls substituierten Phenylgruppe bedeuten X und $X_1$: unsubstituiertes Phenyl oder eine Phenylgruppe, welche z.B. substituiert ist durch: Alkylgruppen, verzweigt oder unverzweigt mit 1 bis 4 Kohlenstoffatomen oder Halogen wie Fluor, Chlor oder Brom; X und $X_1$ in der Bedeutung einer $NHCOR_1$-Gruppe mit $R_1$ = Alkyl ($C_1$–$C_4$), Cycloalkyl, gegebenenfalls substituiertes Aryl oder einen heterocyclischen Ring stellt z.B. den Methyl-, Äthyl-, Cyclohexyl-, Phenyl-, Alkylphenyl-, Halogenphenyl- oder den Furan-, Thiophen-, Pyridin-, Chinolin-, Phenylthiazol- und Phenyltriazol-, und vor allem den o-Chlorphenyl- oder Methylcarbonylaminorest dar.

Bedeutet X und $X_1$ die $OCOR_2$-Gruppe so handelt es sich z.B. um folgende Reste: $OCO \cdot CH_3$; $OCO \cdot C_2H_5$; $OCO \cdot C_3H_7$ (n und iso) und $OCO \cdot C_4H_9$ (n und iso) sowie $OCO \cdot CH_2 \cdot C_6H_5$ und $OCO \cdot$ Cyclohexyl; bedeutet X und $X_1$ die

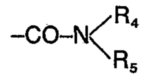 Gruppe,

so kommen als derartige Gruppen z.B. in Frage: $CONH_2$ oder $CONHC_6H_5$, bedeutet X und $X_1$ die $COOR_6$-Gruppe, so handelt es sich z.B. um folgende Reste: COOH, $COOCH_3$ und $COOC_2H_5$, wobei die Alkylreste gegebenenfalls noch durch z.B. OH oder $C_6H_5$ substituiert sein können.

In bevorzugten Dioxazinverbindungen stellen X und $X_1$ gleiche Substituenten dar; insbesondere bedeuten X und $X_1$:H, Cl, Br, $CONH_2$, $CONHC_6H_5$, $NHOCOC_6H_4Cl$, NH · CO-Thiophen, CN, COO-alkyl, vor allem $COOCH_3$ und $COOC_2H_5$, $NHCOCH_3$, $OCOCH_3$, Alkyl, vor allem $CH_3$ und $C_2H_5$ oder COOH; besonders interessant sind solche Verbindungen, worin X und $X_1$ je die Gruppe $NHCOR_1$ darstellen, worin $R_1$ Alkyl ($C_1$–$C_4$) oder gegebenenfalls substituiertes Aryl bedeutet oder X und $X_1$ bedeuten je vor allem Halogen, insbesondere Chlor.

Die Benzoreste A und/oder $A_1$ können gleich oder verschieden, ein- oder mehrmals ausser durch die Gruppen Z und Y weitersubstituiert sein. Als Substituenten kommen z.B. in Frage: Halogen wie Fluor, Chlor oder Brom; CN; Alkyl mit 1 bis 8 Kohlenstoffatomen welches gegebenenfalls substituiert sein kann, z.B. durch Phenyl; ferner kommen als Substituenten in A/$A_1$ in Frage: unsubstituiertes Phenyl und Phenyl, welches substituiert sein kann durch z.B: Halogen wie Fluor, Chlor oder Brom; dann durch COOH, $NO_2$, $NH_2$ oder am N-Atom mono- oder disubstituiertes $NH_2$ z.B. substituiert durch Alkyl ($C_1$–$C_4$); weiterhin NHCO-Alkyl ($C_1$–$C_4$) oder NHCO–$C_6H_5$, ferner kann das Phenyl in A/$A_1$ substituiert sein durch Alkoxy ($C_1$–$C_4$) oder Alkyl ($C_1$–$C_4$), dann kann A/$A_1$ substituiert sein durch $NHCOR_{18}$ worin $R_{18}$ bedeutet: unsubstituiertes Alkyl oder Alkyl welches substituiert ist z.B. durch Phenyl, Alkoxy, Cycloalkyl, unsubstituiertes Aryl oder substituiertes Aryl wie z.B. unsubstituiertes Phenyl oder Phenyl, welches substituiert ist durch Halogen, Alkoxy, Alkyl, $NO_2$ oder CN; weitere Substituenten in A und/oder $A_1$ sind: $NO_2$, SCN, heterocyclische Ringe wie z.B. der Benzthiazolrest, welche noch weitersubstituiert sein können, z.B. durch Alkyl ($C_1$–$C_4$); ferner Alkoxygruppen wie die Methoxy-, Äthoxy- oder n-oder iso-Propoxygruppe, welche Alkoxygruppen noch substituiert sein können durch z.B. weitere Alkoxygruppen oder durch OH oder Phenyl, weiter kommt die gegebenenfalls substituierte (z.B. durch Alkyl) Phenoxygruppe in Frage und die Gruppe $NHR_{19}$ worin $R_{19}$ bedeutet: Wasserstoff, Aryl vor allem Phenyl welches gegebenenfalls substituiert oder mit Heteroringen z.B. zu einem Benzoxazol, Benzthiazol oder Benzimidazol kondensiert sein kann oder $R_{19}$ bedeutet einen Heteroring, z.B. den Benzthiazolring. Schliesslich können A und/oder $A_1$ noch weitersubstituiert sein

durch eine Alkylsulfonylgruppe oder durch die Gruppe $CONHR_{20}$ worin $R_{20}$ einen gegebenenfalls substituierten Arylrest, wie den unsubstituierten Phenylrest oder einen Phenylrest bedeutet der substituiert ist durch Halogen wie Fluor, Chlor oder Brom, durch Phenyl, Methyl oder Äthyl.

In bevorzugten Dioxazinverbindungen sind beide Benzoreste A und $A_1$ ein- oder mehrmals gleich substituiert, vor allem durch Cl, $NHCOC_6H_5$, $NHCOC_6H_4Cl$, $NHCOC_6H_4 \cdot OCH_3$ Alkoxy ($C_1$–$C_3$), Alkoxy ($C_1$–$C_3$) substituiert durch OH oder Alkoxy oder durch Alkyl, vor allem $CH_3$; $-O \cdot C_6H_5$, $-O \cdot C_6H_4 \cdot CH_3$, $-C_6H_5$, $-CH_2 \cdot C_6H_5$ und $-NHCO \cdot$ alkyl vor allem $-NHCO \cdot C_3H_7$.

Z in der oben angegebenen Bedeutung stellt z.B. dar:

a) als eine basische Gruppe die Reste

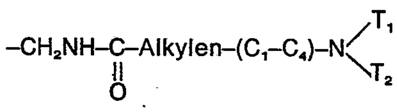

oder

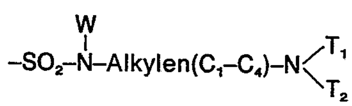

oder

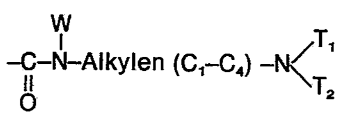

worin bedeuten

$T_1$: H oder einen niedrigmolekularen gegebenenfalls durch Hydroxyl substituierten Alkylrest oder einen gegebenenfalls durch 1 bis 3 Methylreste substituierten Cyclohexylrest oder einen Phenylrest;

$T_2$: einen niedrigmolekularen, gegebenenfalls durch Hydroxyl substituierten Alkylrest; ferner können die Reste $T_1$ und $T_2$ zusammen mit dem N-Atom einen Pyrrolidin-, Piperidin-, Morpholin- oder Piperazinring bilden.

W: Wasserstoff, eine unsubstituierte Alkylgruppe mit 1 bis 4 Kohlenstoffatomen oder eine durch z.B. OH oder Alkoxy ($C_1$–$C_4$) substituierte Alkylgruppe ($C_1$–$C_4$); es handelt sich beim

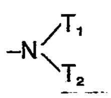

Rest z.B. um folgende Reste:

$-N-(CH_3)_2$

$-N-(C_2H_5)_2$

$-NH-CH_3$

$-NH-C_3H_7$

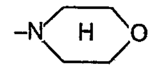

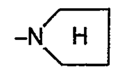

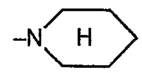

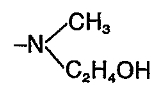

$-N-(C_2H_4OH)_2$

b) als eine kationische Gruppe den Rest der Formel:

$-CH_2-NH-CO-alkylen-(C_1-C_4)-K^{\oplus} \quad A^{\ominus}$

worin $K^{\oplus}$ einen Rest der Formeln

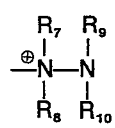 oder 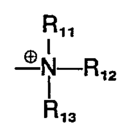

darstellt, worin bedeuten:

$R_7$ und $R_8$ unabhängig voneinander eine Alkylgruppe ($C_1$–$C_4$) oder eine Cycloalkylgruppe oder $R_7$ bildet mit $R_8$ unter Einschluss des N-Atoms einen heterocyclischen Ring;

$R_9$ und $R_{10}$ unabhängig voneinander Wasserstoff, Alkyl ($C_1$–$C_4$) oder Cycloalkyl oder eine Acylgruppe;

$R_{11}$ gegebenenfalls substituiertes Alkyl ($C_1$–$C_4$), Cycloalkyl oder Aryl;

$R_{12}$ gegebenenfalls substituiertes Alkyl ($C_1$–$C_4$) Cycloalkyl, Alkoxy oder Aryl; $R_{13}$ einen gegebenenfalls durch OH, $CONH_2$ oder $NH_2$ substituierten $C_1$–$C_2$-Alkylrest; oder $R_7$ und $R_9$ und/oder $R_8$ und $R_{10}$ bilden mit dem N-Atom zusammen einen heterocyclischen Ring oder $R_{11}$ und $R_{12}$ oder $R_{11}$, $R_{12}$ und $R_{13}$ bilden unter Einschluss des N-Atoms einen heterocyclischen Ring; beim Rest $K^{\oplus}$ handelt es sich beispielsweise um solche der Formeln:

$-N^{\oplus}(CH_3)_3$

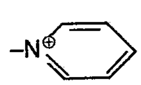

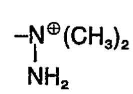

$-N^{\oplus}(C_2H_5)_3$

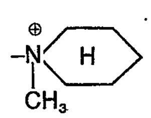

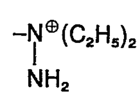

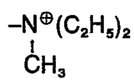

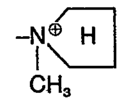

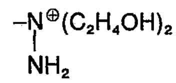

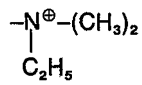

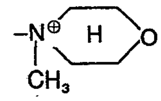

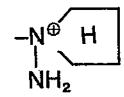

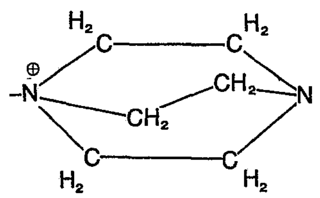

$-N^{\oplus}(C_2H_4OH)_3$

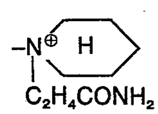

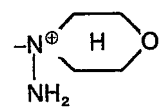

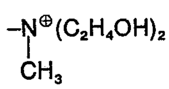

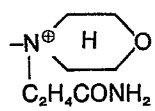

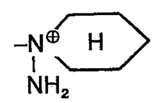

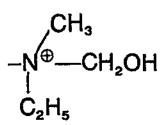

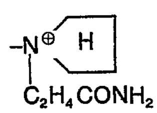

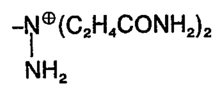

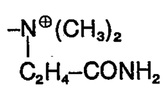

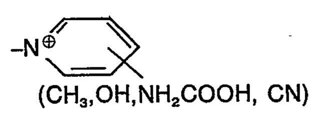

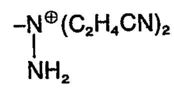

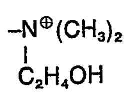

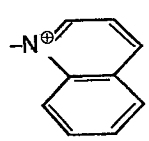

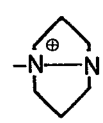

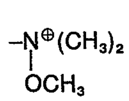

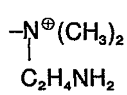

oder Z bedeutet eine kationische Gruppe der Formel

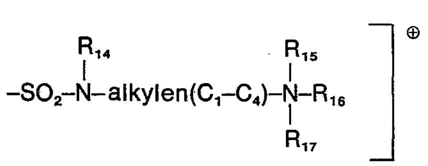

worin bedeuten:

«alkylen» eine Alkylenbrücke, welche durch –O–, –S–, –NH– oder N– unterbrochen sein kann; alkyl ($C_1$–$C_4$)

$R_{14}$ Wasserstoff oder einen Alkylrest;

$R_{15}$ und $R_{17}$ je einen Alkylrest ($C_1$–$C_4$) oder einen Cycloalkylrest; $R_{16}$ einen Alkylrest ($C_1$–$C_4$), einen Cycloalkylrest, einen Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring; oder Z bedeutet eine kationische Gruppe der Formel

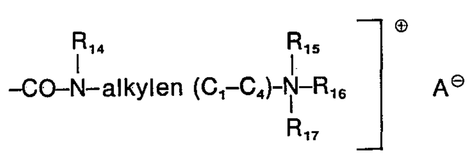

worin die Symbole $R_{14}$, Alkylen, $R_{15}$, $R_{16}$ und $R_{17}$ die oben angegebene Bedeutung haben, und worin $A^{\ominus}$ in allen Fällen ein Anion darstellt.

Der Ausdruck «niedrigmolekular», im Zusammenhang mit Alkyl- und Alkoxygruppen besagt, dass diese Gruppen 1–4 C-Atome im Alkyl- bzw. Alkoxyrest enthalten.

Als Anionen A kommen für den Fall, dass Z eine quaternisierte basische Gruppe darstellt sowohl anorganische wie organische Anionen in Frage; beispielsweise sind genannt: Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Bevorzugte Anionen sind in Abhängigkeit von der Verwendungsart der Verbindungen: z.B. das Acetat- und Chlorid-ion (für Textil- und Papiermaterialien); und das Chlorid-ion für die Tintenbereitung.

In bevorzugten Dioxazinverbindungen bedeutet Z eine basische Gruppe oder einen, eine derartige Gruppe enthaltenden Rest und n die Zahlen 2 oder 3.

Y in der Bedeutung einer anionischen Gruppe stellt z.B. die Phosphorsäuregruppe, die Carbonsäuregruppe oder die Sulfonsäuregruppe oder eine Salzform wie das Na–, K–, Li– oder $NH_4$-Salz dieser freien Säuregruppe dar.

In bevorzugten Dioxazinverbindungen bedeutet m die Zahl 0 oder Y stellt die $SO_3H$-Gruppe bzw. eine Salzform davon dar.

Besonders interessante Dioxazinverbindungen entsprechen der Formel I, worin Z eine kationische Gruppe bedeutet, n die Zahlen 2 oder 3, m die Zahl 0, X und $X_1$ je Cl und worin A und $A_1$ gleich substituiert sind.

Die basischen Dioxazinverbindungen der Formel I sind Verbindungen die gekennzeichnet sind durch brillante Rot- bis Blaunuancen, durch Unempfindlichkeit auf Wasserhärtegrade; und durch eine hohe Affinität vor allem für Cellulosematerialien; darüberhinaus ist es nicht nötig zur Applikation dieser Dioxazinverbindungen dem Applikationsbad Fixiermittel zuzusetzen.

Die Herstellung der Dioxyzinverbindungen der Formel I erfolgt nach bekannter Art und Weise. Eine Möglichkeit besteht z.B. darin, dass man:

a) in eine Verbindung der Formel II

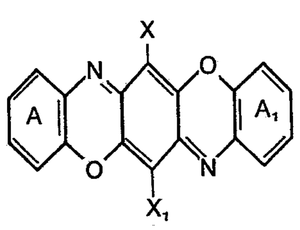

(II)

worin die Symbole A, $A_1$, X und $X_1$ die unter Formel I angegebene Bedeutung haben, eine gegebenenfalls quaternisierbare basische Gruppe Z einführt, anschliessend, sofern Y noch nicht vorhanden ist, gegebenenfalls eine anionische Gruppe Y einführt und die quaternisierbare basische Gruppe Z gegebenenfalls mit einem Quaternisierungsmittel quaternisiert, oder

b) eine Verbindung der Formel III

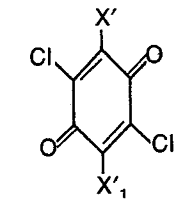

(III)

worin X′ und $X_1'$ dasselbe wie X und $X_1$ jedoch nicht CN bedeuten mit mindestens a Mol einer Verbindung $A{-}NH_2$ und b Mol einer Verbindung $A_1{-}NH_2$ wobei die Summe von a und b mindestens 2 ist, welche Verbindungen $A{-}NH_2$ bzw. $A_1{-}NH_2$ eine gegebenenfalls quaternisierbare basiche oder eine bereits quaternisierte basische Gruppe Z n-mal enthalten unter Ringschluss zu einer Dioxazinverbindung kondensiert, eine gegebenenfalls vorhandene quaternisierbare basische Gruppe Z mit einem Quaternisierungsmittel quaternisiert und gegebenenfalls eine anionische Gruppe Y einführt.

Was die Verfahrensvariante a) betrifft so sind die Ausgangsverbindungen der Formel II mit und ohne einer anionischen Gruppe Y bekannt (z.B. US 2 016 504, 2 082 344 und 2 026 092) und können nach bekannter Art und Weise erhalten werden. Die Einführung einer quaternisierbaren basischen Gruppe Z oder die Einführung einer Gruppe Z, welche eine quaternisierbare Gruppe enthält erfolgt ebenfalls nach bekannter Art und Weise z.B. indem man die Verbindung der Formel II mit N-Methylolchloracetamid in konz. $H_2SO_4$ oder Phosphorsäure gegebenenfalls in Gegenwart von $P_2O_5$ bei 0°–50 °C, vorzugsweise Raumtemperatur umsetzt oder indem man in die Verbindung der Formel II primär die $SO_2Cl$ Gruppe nach üblicher Art und Weise (z.B. mit Chlorsulfonsäure bei 100–150 °C) einführt, und dann aminiert oder indem man in die Verbindung der Formel II die $-CH_2Cl$ Gruppe einführt und anschliessend aminiert.

Als quaternisierbare basische Gruppe Z kommen alle basischen Gruppen in Frage welche befähigt sind, während des Färbeprozesses Protonen aufzunehmen um in kationische Gruppen umgewandelt zu werden. Beispiele für derartige Verbindungen welche eine basische quaternisierbare Gruppe Z einführen sind z.B. N-Methalolchloracetamid unter nachfolgender Umsetzung mit einem Amin wie Pyridin oder man führt primär in die Molekel z.B. mit Chlorsulfonsäure den Rest $-SO_2Cl$ ein und setzt anschliessend mit einem Diamin wie z.B. 3-Dimethylamino-1-propylamin um.

Ist gewünscht, dass die quaternisierbare basische Gruppe Z in der Verbindung der Formel II in eine quaternisierte Verbindung übergeführt wird, so erfolgt die Quaternisierung ebenfalls nach bekannter Art und Weise z.B. in einem inerten Lösungsmittel wie Chlorbenzol, oder gegebenenfalls in wässriger Suspension oder ohne Lösungsmittel in einem Überschuss des Quaternisierungsmittels bei einer Temperatur von etwa 20–120 °C, mit Quaternisierungsmitteln.

Geeignete Quaternisierungsmittel sind z.B. Alkylhalogenide, wie Methyl- oder Äthylchlorid, Methyl-, Äthyl- oder Butylbromid oder Methyl- oder Äthyljodid, vor allem Alkylsulfate, wie Dimethyl-, Diäthyl- und Dibutylsulfat, oder Benzylchlorid, Chloressigsäureamid, Acrylsäureester, Epoxide, wie Äthylenoxyd, Epichlorhydrin, Alkylester von aromatischen Sulfonsäuren, wie Methylp-toluolsulfonat, Methylbenzolsulfonat, sowie die Propyl- und Butylester von Benzolsulfonsäure.

Für den Fall, dass die Verbindungen der Formel II keine anionische Gruppe Y enthalten, so können diese Gruppen Y vorteilhaft vor der Quaternisierungsreaktion der quaternisierbaren Gruppe in eine quaternisierte Gruppe Z, eingeführt werden. Das geschieht z.B. durch Sulfierung mit Schwefelsäure oder für die Einführung einer Phosphorsäuregruppe nach der Arbeitsweise der US-PS 2 845 420.

Nach der eventuellen Quaternisierung und Einführung der anionischen Gruppe Y werden die Dioxazinverbindungen der Formel I vom Reaktionsmedium getrennt und getrocknet.

Was die Verfahrensweise b) betrifft, so dient hier als Ausgangsmaterial die Verbindung der Formel III, welche mit a-Mol, $A-NH_2$, bzw. b-Mol, $A_1-NH_2$ unter Ringschluss nach bekannter Art und Weise (K. Venkataraman, Vol. II (1952) S. 786 «The Chemistry of Synthetic Dyes» NY.) kondensiert wird. Für den Fall, dass X und/oder $X_1$ im Endprodukt der Formel I CN bedeuten, so erfolgt die Herstellung derartiger Verbindungen z.B. derart, dass man die Verbindung der Formel IIIa

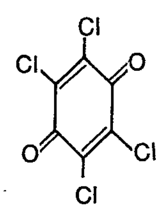

(IIIa)

mit a-Mol $A-NH_2$ bzw. b-Mol $A_1-NH_2$ unter Ringschluss gemäss den obigen Angaben kondensiert und anschliessend die beiden Cl-Atome durch CN-Atome ersetzt, indem man z.B. das Kondensationsprodukt mit CuCN nach bekannter Art und Weise z.B. nach der Arbeitsweise der DE-OS 2 733 539, umsetzt.

Enthalten die Amine $A-NH_2$ bzw. $A_1-NH_2$ eine quatenisierbare basische Gruppe Z so kann diese analog den vorstehenden Ausführungen in eine quaternisierte Gruppe übergeführt werden, gegebenenfalls wird anschliessend noch eine anionische Gruppe Y wie weiter oben beschrieben, eingeführt.

Auf Grund dieser Verfahrensmassnahmen ist es möglich Dioxazinverbindungen der Formel I herzustellen wo beide Symbole A gleich oder voneinander verschieden substituiert sind. Zudem können auch Mischungen hergestellt werden die enthalten: Dioxazinverbindungen der Formel I wo beide Symbole A gleich substituiert sind und Dioxazinverbindungen der Formel I wo die beiden Symbole A verschieden substituiert sind.

Verwendung finden die neuen basischen, gegebenenfalls quaternisierten Dioxazinverbindungen der Formel I, als Farbstoffe zum Färben und Bedrucken von Textilmaterialien, Papier und Leder sowie zur Bereitung von Tinten.

Dienen diese Farbstoffe zum Färben und Bedrucken von Textilmaterialien so kommen als solche Wolle, Seide und sauer modifizierte Polyamidmaterialien, sowie Polyacrylnitrilmaterialien, vor allem Nasskabel und basisch färbbares, modifiziertes Polyestermaterial in Frage. Vor allem kommen jedoch natürliche und regenerierte Cellulosematerialien im besonderen Baumwolle und Viscose in Frage, wobei man z.T. brillante rote bis blaue Ausfärbungen erhält. Die erfindungsgemässen Dioxazinverbindungen der Formel I haben auf diesen Textilmaterialien vor allem auf den genannten Cellulosematerialien ein gutes Ziehvermögen, einen guten Ausziehgrad und guten Aufbau und die erhaltenen Färbungen weisen sehr gute Echtheiten, vor allem Nassechtheiten wie Waschechtheiten und Lichtechtheiten auf. Bei den basischen Dioxazinfarbstoffen können die Nassechtheiten wenn nötig, durch eine Insolubilisierung, z.B. durch eine alkalische Nachbehandlung auf der Faser, noch weiter verbessert werden. Darüberhinaus ist es von Vorteil, dass die erfindungsgemässen Dioxazinverbindungen der Formel I ohne Vorbehandlung der Cellulosematerialien und ohne zusätzliche Salzzugabe in die Färbeflotte auf diese Materialien aufziehen.

Eine weitere Verwendung der erfindungsgemässen Dioxazinverbindungen der Formel I liegt in der Anwendung zum Färben von Papier aller Arten, vor allem von gebleichtem, ungeleimtem und geleimtem ligninfreiem Papier. Ganz besonders geeignet sind diese Verbindungen zum Färben von ungeleimtem Papier (Tissues) als Folge ihrer sehr hohen Standard-Affinität zu diesem Substrat.

Die erfindungsgemässen Dioxazinverbindungen ziehen sehr gut auf diese Substrate, wobei die Abwasser – auch bei tiefen Nuancen (bis über 1/1 RT = Richttyptiefe) – farblos bleiben, was ein eminenter technischer und ökologischer Vorteil, insbesondere im Hinblick auf die heutigen Abwasser-Gesetze ist. Der gute Ausziehgrad ist auch für eine gute Reproduzierbarkeit der Nuance von Vorteil Der Ausziehgrad wird praktisch nicht von der Wasserhärte beeinflusst. Die Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte «Tissues» erwünscht, bei denen vorhersehbar ist, dass das gefärbte Papier in nassem Zustand (z.B. getränkt mit Wasser, Alkohol, Tensid-Lösung usw.) in Berührung mit anderen Flächen wie Textilien, Papier u.dgl. kommt, die gegen Verschmutzung geschützt werden müssen.

Die hohe Affinität für Papier und die grosse Ausziehgeschwindigkeit der erfindungsgemässen Dioxazinfarbstoffe ist für das Kontinue-Färben von Papier von grossem Vorteil, und ermöglicht somit einen breiteren Einsatz dieses bekannten sehr wirtschaftlichen Verfahrens, das folgende Vorteile aufweist:

a) eine einfachere und schnellere Korrektur der Nuance und deshalb weniger Verlust an nicht Typkonformem Papier (Ausschuss) im Vergleich zur diskontinuierlichen Papiermassefärbung;

b) eine bessere Konstanz der Nuance; (kein «Tailing») und

c) Wenn der Farbstoff kurz vor dem Stoffauflauf, im Dünnstoff, zudosiert wird, erübrigt sich eine gründliche Reinigung von Holländer, Mischbutte usw. nach jeder Partie wobei gleichzeitig der Arbeitsprozess verkürzt und das Verfahren optimiert wird.

Weiter dienen die Dioxazinverbindungen der Formel I zum Färben von Ledermaterialien nach den verschiedensten Applikationsverfahren, wie Sprühen, Bürsten und Tauchen und zur Bereitung von Tinten aller Arten wie für Kugelschreiber und Drucktinten.

Schliesslich sind die neuen Dioxazinverbindungen der Formel I noch zum Färben von linearen synthetischen Superpolyamiden wie Polyhexamethylenadipamid in der Masse geeignet. Das Anfärben der Polyamidschnitzel oder -chips erfolgt dabei vor allem aus einem wässrigen Bas in Gegenwart von Netz- oder Dispergiermittel und gegebenenfalls Salzen und anschliessendem Schmelzen und Verformen.

Im Hinblick auf die reduzierbaren Eigenschaften der geschmolzenen Superpolyamidschmelzen und der hohen Schmelztemperatur (etwa 270–300 °C) stellt die Verwendung dieser Farbstoffe der Formel I eine überraschende Bereicherung der Technik dar.

Aus der FR-A-1 298 841 sind kationische Farbstoffe bekannt, die zum Färben und Bedrucken von Polyacrylnitrilmaterialien verwendet werden, wobei der kationische Rest der Formel $-N \cdot X-OC-CH_2-CH \cdot R-$(tert.) entspricht und nicht vergleichbar ist mit dem erfindungsgemässen kationischen Rest. Die FR-A-1 117 562 beschreibt weiter neue basische Farbstoffe, wobei im Beispiel 18 ein basischer Dioxazinfarbstoff beschrieben wird dessen chromophores System ausserhalb des erfindungsgemässen Chromophors liegt. Die CH-A-485 806 beschreibt schliesslich ein Verfahren zur Herstellung von Farbstoffen mit basischen und kationischen Gruppen, die ebenfalls ausserhalb der erfindungsgemässen basischen bzw. kationischen Gruppe liegen; dasselbe trifft für die GB-A-1 028 916 zu die im Beispiel 25 einen kationischen Dioxazinfarbsotff beschreibt und für die GB-A-850 159 die im Beispiel 9 einen Dioxazinfarbstoff mit einer basischen Sulfothiomorpholidgruppe beschreibt. – Gegenüber all diesen nächstbekannten Farbstoffen sind die erfindungsgemässen Farbstoffe neu und zeichnen sich vor allem als gute Papierfarbstoffe mit sehr guten Echtheiten aus; dies ist überraschend und konnte dem aufgezeigten Stand der Technik nicht entnommen werden.

Die folgenden Beispiele veranschaulichen die Erfindung ohne sie darauf zu limitieren. Die Temperaturen sind in Grad Celsius angegeben, Teile (T) bedeuten Gewichtsteile und %-Angaben sind Gewichtsprozente.

Die Abkürzung RKN stellt eine Qualitätsbezeichnung dar und gibt den Reinheitsgrad der Cellulose an; die Abkürzung SR = Schopper-Riegler gibt den Mahlgrad an.

Beispiel 1

In 500 T 90% Schwefelsäure wird ein Gemisch von 57 T der Verbindung der Formel

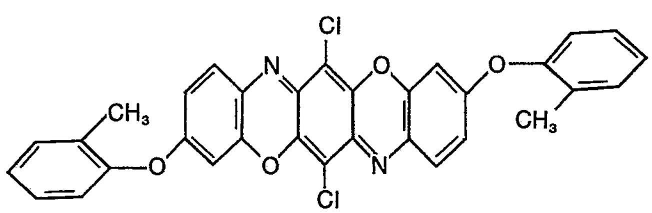

(Kondensationsprodukt aus Chloranil mit 1-Amino-2,4-o-methylphenoxy-benzol) und 28 T N-Methylolchloracetamid bei 0–5° eingetragen und während 15 Stunden bei 0–5° gerührt. Man fällt das Reaktionsprodukt auf Eis, saugt es wieder ab und wäscht es mit Wasser. Nach der Trocknung erhält man 72 T der Verbindung der Formel:

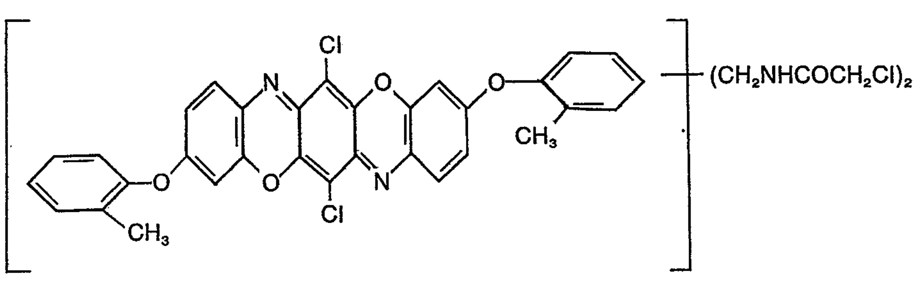

60 T des so erhaltenen Produktes werden in 400 T Pyridin eingetragen und 1 Stunde auf 100° erwärmt. Der ausgefallene Farbstoff der Formel:

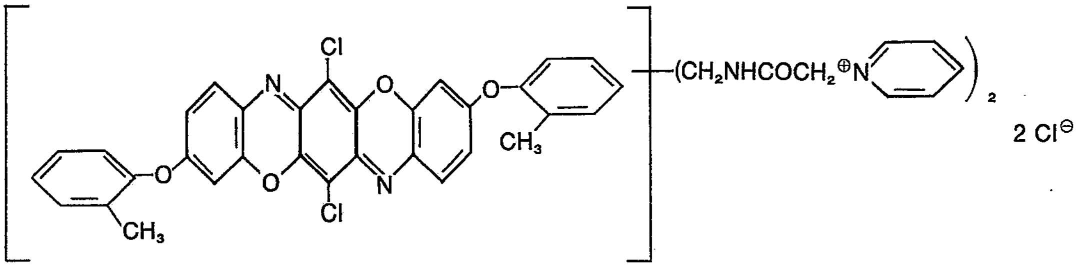

wird abgesaugt und getrocknet. Er zeigt auf Papier und Baumwolle ein sehr gutes Ausziehvermögen, wobei die hellen roten Färbungen ein gutes Echtheitsniveau besitzen.

Ersetzt man im obigen Beispiel Pyridin durch α- oder γ-Picolin oder durch ein Gemisch von α-/γ-Picolin, oder durch Triäthylendiamin oder N,N-Dimethylhydrazin, oder N,N-Dimethyläthanolamin so erhält man ähnliche Farbstoffe mit gleich guten färberischen Eigenschaften.

Verwendet man anstelle der 57 T des Kondensationsproduktes aus Chloranil mit 1-Amino-2,4-o-methylphenoxy-benzol äquivalente Teile der in folgender Tabelle 1 aufgeführten Kondensationsprodukte, setzt diese mit 28 T N-Methylolchloracetamid um und aminiert mit Pyridin, so erhält man bei im übrigen gleicher Arbeitsweise kationische Dioxazinfarbstoffe der in Kolonne 3 angegebenen Formel deren Farbnuance auf Baumwolle in der letzten Kolonne der Tabelle angegeben ist.

Tabelle 1

| Beispiel | 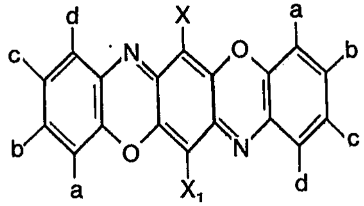<br>Kondensationsprodukt<br>X/X₁ | a | 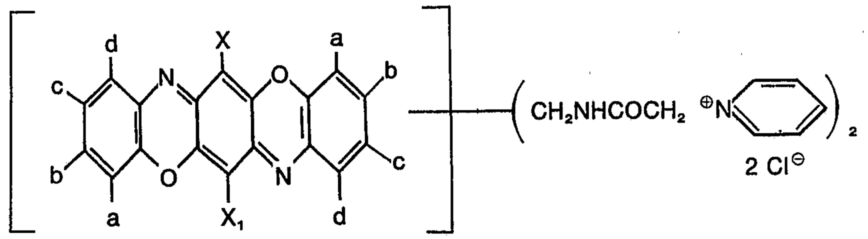<br>Dioxazinfarbstoff<br>b | c | d | Nuance auf Baumwolle |
|---|---|---|---|---|---|---|
| 2 | $CONH_2$ | H | 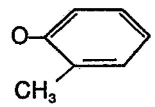 | H | H | rot |
| 3 | 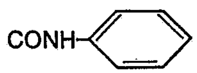 | H | | H | H | rot |
| 4 | Cl | Cl | | H | H | rot |
| 5 | Br | Cl | 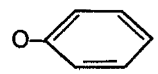 | H | H | rot |
| 6 | Cl | H | $O-C_3H_7$ | H | H | rubin |
| 7 | 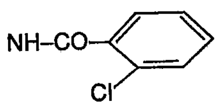 | H | $O-C_2H_5$ | H | H | rot |
| 8 | Cl | Cl | $O-CH_3$ | H | H | rubin |
| 9 | H | Cl | $O-CH_3$ | H | H | rot |
| 10 | 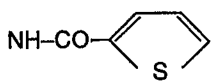 | H | $O-C_2H_5$ | H | H | rot |
| 11 | CN | H | $-OC_2H_4OCH_3$ | H | H | rot |
| 12 | Cl | H | $-CH_3$ | H | H | rot |
| 13 | Cl | H | 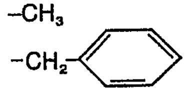 | H | H | rot |
| 14 | Cl | H | 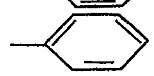 | H | H | rot |
| 15 | Cl | H | 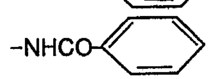 | H | H | violett |
| 16 | Cl | H | 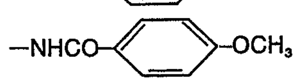 | H | H | rubin |

Tabelle 1 (Fortsetzung)

| Beispiel | 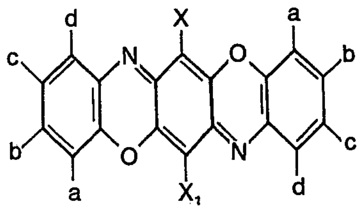 Kondensationsprodukt X/X₁ | a | 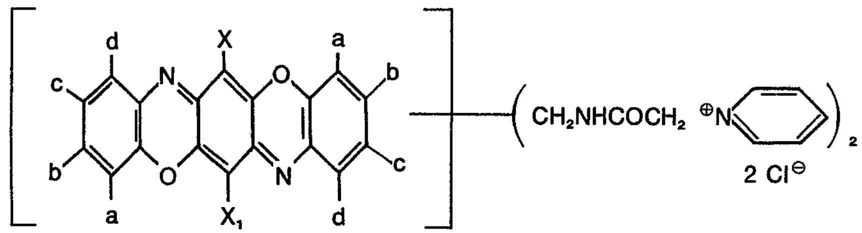 Dioxazinfarbstoff b | c | d | Nuance auf Baumwolle |
|---|---|---|---|---|---|---|
| 17 | Cl | H | –NHCO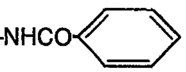 | Cl | H | violett |
| 18 | $COOC_2H_5$ | H | –NHCO–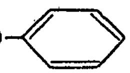 | Cl | H | violett |
| 19 | Cl | H | –NHCO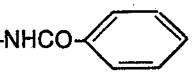 | $-OC_2H_5$ | H | violett |
| 20 | $NHCOCH_3$ | H | –NHCO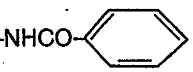 | $-OC_2H_5$ | H | violett |
| 21 | $OCOCH_3$ | H | –NHCO–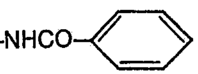 | $-OC_2H_5$ | H | violett |
| 22 | Cl | H | –NHCO–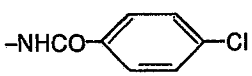–Cl | $-OCH_3$ | H | violett |
| 23 | NHCO–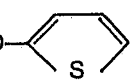 | H | –NH–CO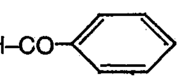 | $-OC_2H_5$ | H | rotstichig-blau |
| 24 | Cl | H | H | CONH–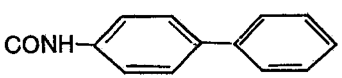 | H | rot |
| 25 | Cl | H | NHCOCH–$CH_3$ / OH | $-OCH_3$ | H | violett |
| 26 | CONH–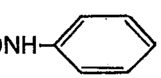 | H | H | H | H | rot |
| 27 | Cl | H | NH–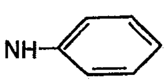 | $-OCH_2CH_2OH$ | H | rotstichig-blau |

Beispiel 28

58 T des Disulfochlorids der Verbindung der Formel:

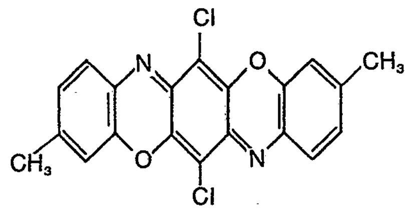

(erhalten durch Kondensation aus Chloranil mit 1-Amino-2-methoxy-5-methylbenzol und anschliessende Chlorsulfonierung gemäss dem Britischen Patent 815 840) werden in Wasser angeschlemmt und mit 22 T 3-Dimethylamino-1-propylamin versetzt. Das Reaktionsgemisch wird 15 Stunden bei Raumtemperatur und schlussendlich noch 3 Stunden bei 60° gerührt. Der ausgefallene basische Farbstoff der Formel

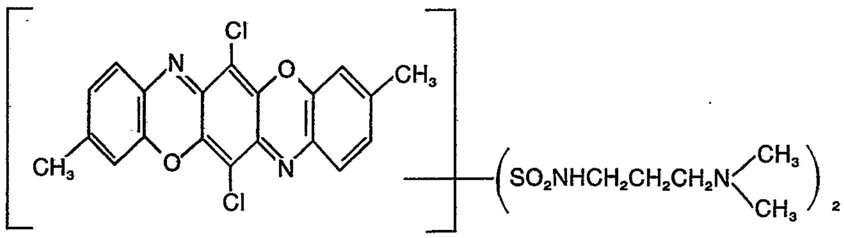

löst sich in verdünnter Essigsäure mit roter Farbe und färbt in dieser Form Baumwolle in einer Rot-Nuance von guten Echtheiten.

Die Quaternisierung wird durch Erwärmen mit Dimethylsulfat in Dichlorbenzol bei 50–60° durchgeführt, wobei man den kationischen Farbstoff der Formel

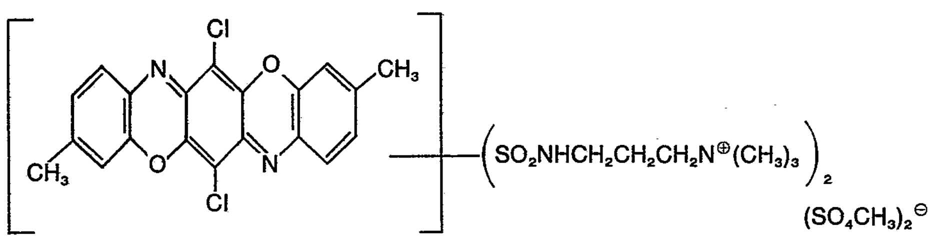

erhält, der auf Baumwolle gefärbt, eine rote Nuance von guten Echtheiten ergibt.

Quaterniert man mit Äthylenchlorhydrin statt mit Dimethylsulfat so erhält man einen ähnlichen Farbstoff mit gleich guten färberischen Eigenschaften.

Verwendet man anstelle des vorstehend genannten Kondensationsproduktes aus Chloranil mit 1-Amino-2-methoxy-5-methylbenzol äquivalente Teile eines der in folgender Tabelle 2 genannten Kondensationsprodukte, so erhält man bei im übrigen gleicher Arbeitsweise kationische Dioxazinfarbstoffe der in Kolonne 3 angegebenen Formel, deren Nuance auf Baumwolle in der letzten Kolonne der Tabelle angegeben ist.

Tabelle 2

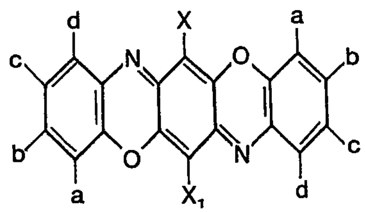

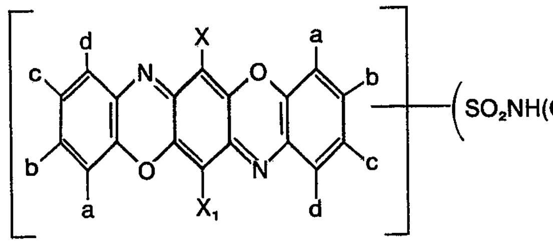 $-\left(SO_2NH(CH_2)_3N^{\oplus}(CH_3)_3\right)_2\ (SO_4CH_3^{\ominus})_2$

| Beispiel | Kondensationsprodukt X/$X_1$ | a | Dioxazinfarbstoff b | c | d | Nuance auf Baumwolle |
|---|---|---|---|---|---|---|
| 29 | Cl | H | H | H | H | rot |
| 30 | Cl | H | 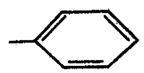 | H | H | rot |
| 31 | Cl | 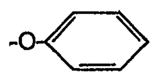 | H | H | H | rot |
| 32 | Cl | H | 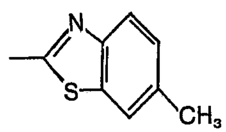 | H | H | violett |
| 33 | Cl | H | NH– 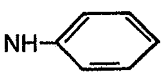 | H | H | blau |
| 34 | $X=CH_3$; $X_1=H$ | H | 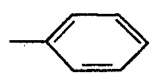 | H | H | rot |
| 35 | Cl | H | NHCO– 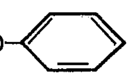 | $CH_3$ | H | rotstichig-blau |
| 36 | Cl | H | H | $-CH_2-$ 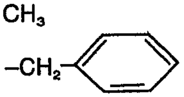 | H | rot |
| 37 | Cl | H | NH– 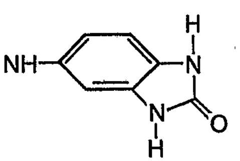 | H | H | blau |

Beispiel 38

12 T des Disulfochlorids erhalten gemäss dem Beispiel 28 werden in 100 T Wasser bei 0–5° angeschlemmt und mit 8 T 2-Chloräthylamin-chlorhydrat versetzt. Nach der Zugabe von 50 T 10%iger wässeriger Natronlauge wird das Reaktionsgemisch noch 15 Stunden bei Raumtemperatur gerührt. Das so erhaltene Di-2-chloräthylsulfamid wird abgesaugt und mit 250 Teilen einer 50%igen wässeriger Dimethylaminlösung 24 Stunden bei Raumtemperatur versetzt. Der basische Dioxazinfarbstoff der Formel

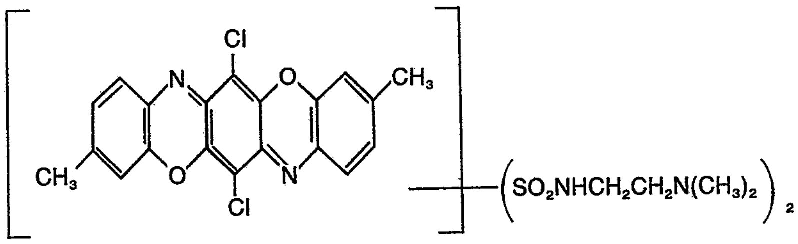

wird, wie im Beispiel 28 beschrieben, isoliert und zu einem kationischen Farbstoff quaterniert.

Beispiel 39

48 T des Dicarbonsäurechlorids der Verbindung der Formel:

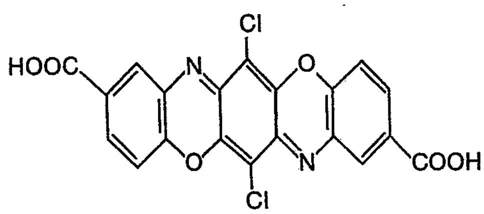

(erhalten gemäss der US-PS 2 564 381) werden in gleicher Arbeitsweise wie im Beispiel 28 in einen kationischen Dioxazinfarbstoff der Formel

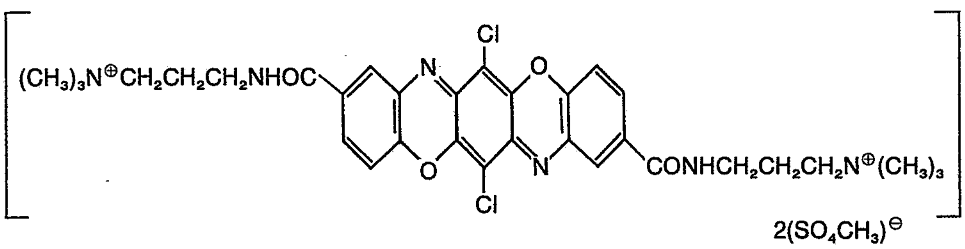

umgewandelt; dieser Farbstoff färbt Baumwolle und Papier in roten Tönen von guten Echtheiten.

Ausgehend von den in der Tabelle 3 genannten Dioxazin-dicarbonsäuren werden bei im übrigen gleicher Arbeitsweise ähnliche kationische Farbstoffe erhalten, die an der Stelle, wo die COOH-Gruppe(n) steht eine

$$-CONHCH_2CH_2CH_2N^{\oplus}(CH_3)_3] \quad (SO_4CH_3^{\ominus})$$

haben, deren Nuance auf Baumwolle in der letzten Kolonne der Tabelle angegeben ist.

Tabelle 3

| Beispiel | 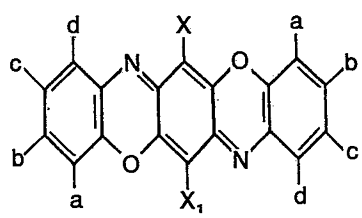 Dioxazindicarbonsäure | | | | | Nuance auf Baumwolle |
|---|---|---|---|---|---|---|
| | X/X$_1$ | a | b | c | d | |
| 40 | Cl | H | COOH | H | H | rot |
| 41 | Cl | H | COOH | Cl | H | rot |
| 42 | Br | H | H | COOH | H | rot |
| 43 | Br | H | COOH | H | H | rot |

Tabelle 3 (Fortsetzung)

| Beispiel | 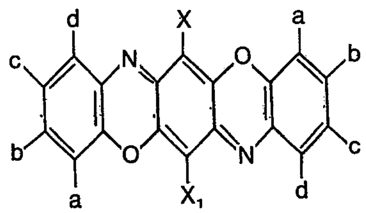 | | | Dioxazindicarbonsäure | | Nuance auf Baumwolle |
|---|---|---|---|---|---|---|
| | $X/X_1$ | a | b | c | d | |
| 44 | Cl | H | 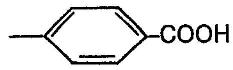 | H | H | rot |
| 45 | COOH | H | H | H | H | rot |
| 46 | COOH | H | H | 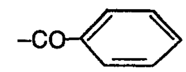 | H | blau/rot |

Beispiel 47

Man vermischt 50 T chemisch gebleichte Buche Sulfit mit 50 T gebleichtem Sulfit RKN 15 (Mahlgrad 22°R) und 3 T des Farbstoffes der Formel

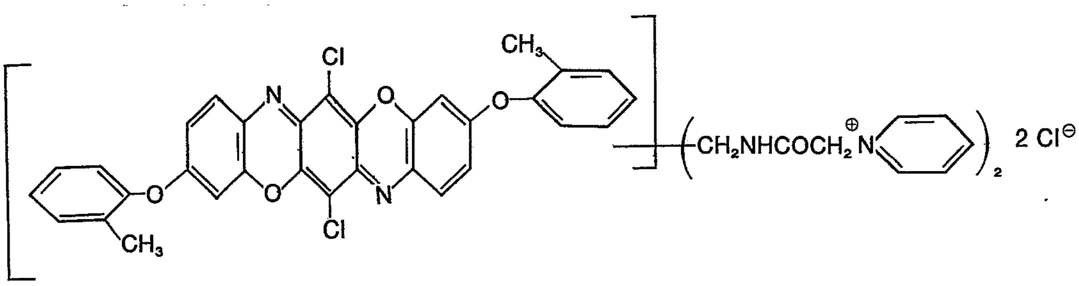

in Wasser (pH6, Wasserhärte 10°dH, Temperatur 20°, Flottenverhältnis 1:40).

Nach 15minütigem Rühren werden Papierblätter auf einem Frank-Blattbildner hergestellt.

Das Papier ist in einer sehr intensiven Rotnuance, die licht- und nassecht ist, gefärbt. Das Abwasser ist völlig farblos (der Ausziehgrad erreicht mehr als 99%).

Beispiel 48

Man vermischt 100 T chemisch gebleichtes Sulfat Stora 32 (Mahlgrad 25°SR) und 1 T des Farbstoffes der Formel

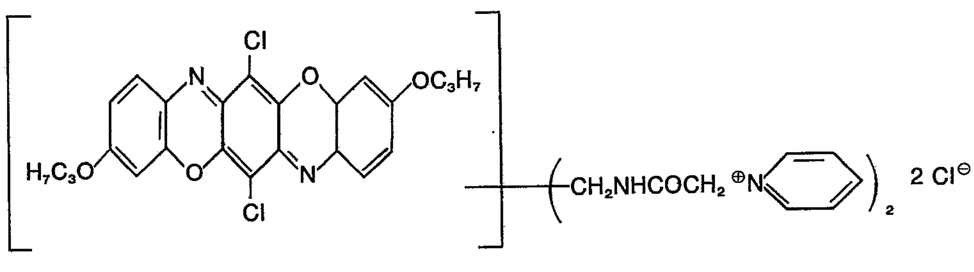

in Wasser (pH6, Wasserhärte 8°dH, Temperatur 20°, Flottenverhältnis 1:40). Nach 15minütigem Rühren werden Papierblätter auf einem Frank Blattbildner hergestellt. Das Papier hat eine intensive Rubin Nuance. Die Licht- und Nassechtheit der Ausfärbungen sind gut. Das Abwasser ist praktisch farblos (Ausziehgrad etwa 97%).

Beispiel 49

Es wird eine Papierbahn aus 50% Buchesulfit und 50% Sulfit RKN 15 (gebleicht) auf einer kontinuierlich arbeitenden Labor-Papiermaschine hergestellt. Zehn Sekunden vor dem Stoffauflauf wird eine Lösung des Farbstoffes gemäss Beispiel 47 kontinuierlich dem Dünnstoff zudosiert. (0,5%ige Färbung, Flottenverhältnis 1:400, Wasserhärte 10°dH, pH6, Temperatur 20°, Mahlgrad des Papiers 22°SR).

Es entsteht eine egal gefärbte Rotnuance von mittlerer Intensität die nass- und lichtecht ist. Das Abwasser ist trotz der kurzen Kontaktzeit völlig farblos.

Beispiel 50

In 100 T chemisch gebleichtes Sulfit (Mahlgrad 22° SR) gibt man 2 T des Farbstoffes gemäss Beispiel 47 ein. Nach 10minütigem Rühren (bei 20°, pH6, Flotte 1:40, Wasserhärte 1°dH) werden 2 T Harzleim zugegeben. Nach weiterem 10minutigem Rühren werden 3 T Aluminiumsulfat zugesetzt. Es wird noch 5 Minuten gerührt und mit dieser Papiermasse Blätter auf einem Frank-Blattbildner hergestellt. Das Papier ist in intensivem Rot gefärbt und ist nass- und lichtecht. Das Abwasser ist föllig farblos.

Beispiel 51

10 T Baumwollgewebe (gebleichte mercerisierte Baumwolle) werden in einem Labor-Baumfärbeapparat in 200 T einer Flotte (Wasserhärte 10°dH, pH6, 3 Umwälzungen der Färbeflotte pro Minute) die 0,025 T des Farbstoffes gemäss Beispiel 47 enthält, gefärbt. Die Temperatur wird zuerst während 15 Minuten bei 20° gehalten und dann in 40 Minuten auf 100° erhöht.

Es entsteht dabei eine Rotnuance von mittlerer Intensität. Die Färbung zeichnet sich durch eine sehr gute Nassechtheit aus. Der Ausziehgrad erreicht ca. 98%.

**Patentansprüche**

1. Dioxazinverbindungen der Formel I

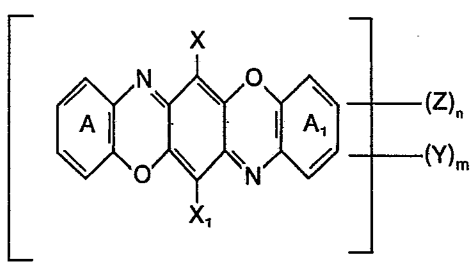 (I)

worin bedeuten:

Z entweder eine basische Gruppe der Formel

a) 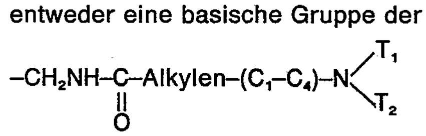

oder

b) 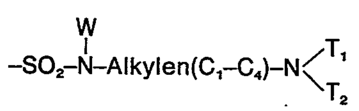

oder

c) 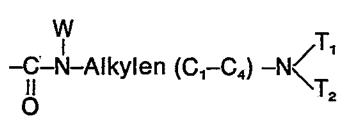

worin bedeuten

$T_1$: H oder einen niedrigmolekularen gegebenenfalls durch Hydroxyl substituierten Alkylrest oder einen gegebenenfalls durch 1 bis 3 Methylreste substituierten Cyclohexylrest oder einen Phenylrest;

$T_2$: einen niedrigmolekularen, gegebenenfalls durch Hydroxyl substituierten Alkylrest; oder die Reste $T_1$ und $T_2$ bilden zusammen mit dem N-Atom einen Pyrrolidin-, Piperidin-, Morpholin- oder Piperazinring;

W: Wasserstoff, eine unsubstituierte Alkylgruppe mit 1 bis 4 Kohlenstoffatomen oder eine durch OH oder Alkoxy ($C_1$–$C_4$) substituierte Alkylgruppe ($C_1$–$C_4$) oder

Z bedeutet eine kationische Gruppe der Formel

a) $-CH_2-NH-CO-$alkylen-$(C_1-C_4)-K^{\oplus}$ $A^{\ominus}$

worin $K^{\oplus}$ einen Rest der Formeln

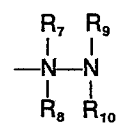 oder 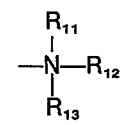

darstellt, worin bedeuten:

$R_7$ und $R_8$ unabhängig voneinander eine Alkylgruppe ($C_1$–$C_4$) oder eine Cycloalkylgruppe oder $R_7$ bildet mit $R_8$ unter Einschluss des N-Atoms einen heterocyclischen Ring;

$R_9$ und $R_{10}$ unabhängig voneinander Wasserstoff, Alkyl $C_1$–$C_4$ oder Cycloalkyl oder eine Acylgruppe;

$R_{11}$ gegebenenfalls substituiertes Alkyl ($C_1$–$C_4$), Cycloalkyl oder Aryl;

$R_{12}$ gegebenenfalls substituiertes Alkyl ($C_1$–$C_4$), Cycloalkyl, Alkoxy oder Aryl; $R_{13}$ einen gegebenenfalls durch OH, $CONH_2$ oder $NH_2$ substituierten $C_1$–$C_2$-Alkylrest; oder $R_7$ und $R_9$ und/oder $R_8$ und $R_{10}$ bilden mit dem N-Atom zusammen einen heterocyclischen Ring oder $R_{11}$ und $R_{12}$ oder $R_{11}$, $R_{12}$ und $R_{13}$ bilden unter Einschluss des N-Atoms einen heterocyclischen Ring; oder Z bedeutet eine kationische Gruppe der Formel

b) 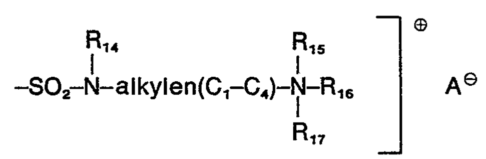

worin bedeuten:

«alkylen» eine Alkylenbrücke, welche durch –O–, –S–, –NH– oder –N– unterbrochen sein kann;
alkyl ($C_1$–$C_4$)

$R_{14}$ Wasserstoff oder einen Alkylrest;

$R_{15}$ und $R_{17}$ je ein Alkylrest ($C_1$–$C_4$) oder ein Cycloalkylrest; $R_{16}$ ein Alkylrest ($C_1$–$C_4$), ein Cycloalkylrest, ein Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring; oder Z bedeutet eine kationische Gruppe der Formel

c) 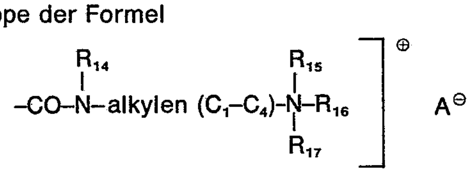

worin $R_{14}$ Wasserstoff oder ein Alkylrest;

$R_{15}$ und $R_{17}$ je ein Alkylrest ($C_1$–$C_4$) oder ein Cycloalkylrest; $R_{16}$ ein Alkylrest ($C_1$–$C_4$), ein Cycloalkylrest, ein Alkoxyrest oder eine $NH_2$-Gruppe; oder zwei der Reste $R_{15}$, $R_{16}$ und/oder $R_{17}$ bilden zusammen mit dem Stickstoffatom einen heterocyclischen Ring; ist und worin $A^{\ominus}$ in allen Fällen ein Anion darstellt;

Y eine anionische Gruppe;

X und $X_1$ unabhängig voneinander gleiche oder verschiedene Substituenten aus der Klasse: Wasserstoff, Halogen, CN, Alkyl ($C_1$–$C_4$); gegebenenfalls substituiertes Phenyl; $NHCOR_1$, worin $R_1$ Alkyl ($C_1$–$C_4$), Cycloalkyl, gegebenenfalls substituiertes Aryl oder einen heterocyclischen Rest darstellt; $OCOR_2$, worin $R_2$ gegebenenfalls substituiertes Alkyl ($C_1$–$C_4$) oder Cycloalkyl bedeutet; oder

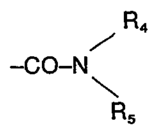

worin $R_4$ und $R_5$ unabhängig voneinander bedeuten:

Wasserstoff, gegebenenfalls substituiertes Alkyl ($C_1$–$C_4$), Cycloalkyl oder Aryl oder $R_4$ bildet zusammen mit $R_5$ unter Einschluss des N-Atoms einen heterocyclischen Ring, oder X und $X_1$ bedeuten die Gruppe $COOR_6$, worin $R_6$ Wasserstoff, gegebenenfalls substituiertes Alkyl oder Cycloalkyl darstellt;

n die Zahlen von 1 bis 4 inklusive

m die Zahlen 0 bis 2 mit der Bedingung, dass die Zahl m kleiner ist als n, und worin die Benzoreste A und $A_1$ gleich oder verschieden, ein- oder mehrmals substituiert sein können und der Rest Z und Y an den Benzorest A und/oder $A_1$ gebunden ist.

2. Dioxazinverbindungen der Formel I gemäss Anspruch 1, dadurch gekennzeichnet, dass Z eine quanternisierte basische Gruppe darstellt.

3. Dioxazinverbindungen der Formel I gemäss Anspruch 1, dadurch gekennzeichnet, dass n die Zahlen 2 oder 3 bedeutet.

4. Dioxazinverbindungen der Formel I gemäss Anspruch 1, dadurch gekennzeichnet, dass m die Zahl 0 bedeutet.

5. Dioxazinverbindungen der Formel I gemäss Anspruch 1, dadurch gekennzeichnet, dass X und $X_1$ gleiche Substituenten darstellen.

6. Dioxazinverbindungen der Formel I gemäss Anspruch 5, dadurch gekennzeichnet, dass X und $X_1$ je die Gruppe $NHCOR_1$ darstellen, worin $R_1$ Alkyl ($C_1$–$C_4$) oder gegebenenfalls substituiertes Aryl bedeutet oder dass X und $X_1$ je Halogen bedeuten.

7. Dioxazinverbindungen der Formel I gemäss Anspruch 6, dadurch gekennzeichnet, dass X und $X_1$ je Chlor bedeuten.

8. Dioxazinverbindungen der Formel I gemäss Anspruch 1, dadurch gekennzeichnet, dass die beiden Benzoreste A und $A_1$ ein- oder mehrmals gleich substituiert sind.

9. Dioxazinverbindungen der Formel I gemäss Anspruch 1, dadurch gekennzeichnet, dass A und $A_1$ ausser durch Z und Y durch folgende Substituenten substituiert sind: Halogen, CN, gegebenenfalls substituiertes Alkyl ($C_1$–$C_8$), gegebenenfalls substituiertes Phenyl; $NHCOR_{18}$, worin $R_{18}$ bedeutet: gegebenenfalls substituiertes Alkyl, Alkoxy, Cycloalkyl, gegebenenfalls substituiertes Aryl, $NO_2$, SCN einen heterocyclischen Ring, eine gegebenenfalls substituierte Alkoxygruppe, die gegebenenfalls substituierte Phenoxygruppe, die Gruppe $NHR_{19}$, worin $R_{19}$ Wasserstoff, Aryl oder einen Heteroring darstellt, die Alkylsulfonylgruppe und die Gruppe $CONHR_{20}$, worin $R_{20}$ gegebenenfalls substituiertes Aryl bedeutet.

10. Dioxazinverbindungen gemäss Anspruch 9, dadurch gekennzeichnet, dass die Benzoreste A und $A_1$ ein- oder mehrmals substituiert sind durch Cl, $NHCOC_6H_5$, $NHCOC_6H_4Cl$, $NHCOC_6H_4OCH_3$, Alkoxy ($C_1$–$C_3$), Alkoxy ($C_1$–$C_3$) substituiert durch OH oder Alkoxy oder durch Alkyl, vor allem $CH_3$; $-O-C_6H_5$, $-O-C_6H_4-CH_3$, $-C_6H_5$, $-CH_2-C_6H_5$ und -NHCO-alkyl vor allem $-NHCO-C_3H_7$.

11. Dioxazinverbindungen gemäss Anspruch 1, dadurch gekennzeichnet, dass Z eine kationische Gruppe bedeutet, n die Zahlen 2 oder 3, m die Zahl 0 darstellt, X und $X_1$ je Cl bedeuten und A und $A_1$ gleich substituiert sind durch die im Anspruch 10 angegebenen Substituenten.

12. Verfahren zur Herstellung von Dioxazinverbindungen der Formel I gemäss Anspruch 1, dadurch gekennzeichnet, dass man

a) in eine Verbindung der Formel II

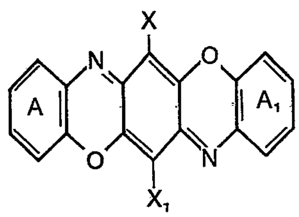

(II)

worin die Symbole A, $A_1$, X und $X_1$ die unter Formel I angegebene Bedeutung haben, eine gegebenenfalls quaternisierbare basische Gruppe Z einführt, anschliessend, sofern Y noch nicht vorhanden ist, gegebenenfalls eine anionische Gruppe Y einführt und die quaternisierbare basische Gruppe Z gegebenenfalls in einem Quaternisierungsmittel quaternisiert, oder

b) eine Verbindung der Formel III

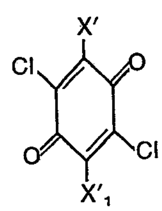

(III)

worin X′ und $X_1$′ dasselbe wie X und $X_1$, jedoch nicht CN bedeuten, mit mindestens a Mol einer Verbindung $A-NH_2$ und b Mol einer Verbindung $A_1-NH_2$, wobei die Summe von a und b mindestens 2 ist, welche Verbindungen $A-NH_2$ bzw. $A_1-NH_2$ eine gegebenenfalls quaternisierbare basische oder eine bereits quaternisierte basische Gruppe

Z n-mal enthalten, unter Ringschluss zu einer Dioxazinverbindung kondensiert, eine gegebenenfalls vorhandene quaternisierbare basische Gruppe Z mit einem Quaternisierungsmittel quaternisiert und gegebenenfalls eine anionische Gruppe Y einführt, oder dass man die Verbindung der Formel IIIa

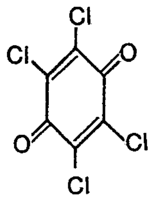

(IIIa)

mit a Mol $A\text{–}NH_2$ bzw. b Mol $A_1\text{–}NH_2$ unter Ringschluss gemäss den obigen Angaben kondensiert und anschliessend die beiden Cl-Atome durch CN-Atome ersetzt.

13. Verwendung der Dioxazinverbindungen der Formel I gemäss Anspruch 1 als Farbstoffe zum Färben und Bedrucken von Textilmaterialien, Papier und Leder sowie zum Färben von linearen synthetischen Superpolyamiden in der Masse.

14. Verwendung der Dioxazinverbindungen der Formel I gemäss Anspruch 1 als Farbstoffe zum Färben und Bedrucken von natürlichen und regenerierten Cellulosematerialien, vor allem Baumwolle und Viscose ohne Salzzugabe.

15. Verwendung der Dioxazinverbindungen gemäss Anspruch 1 zum Färben und Bedrucken von Papier aller Arten.

16. Verwendung der Dioxazinverbindungen gemäss Anspruch 1 zum Färben und Bedrucken von ligninfreiem, gebleichtem und ungeleimtem Papier (Tissue).

17. Verwendung der Dioxazinverbindungen gemäss Anspruch 1 zum Färben und Bedrucken von natürlichen Polyamidmaterialien wie Wolle und Seide oder von basisch färbbaren, modifizierten Polyamiden.

18. Verwendung der Dioxazinverbindungen gemäss Anspruch 1 zum Färben und Bedrucken von Polyacrylnitrilmaterialien.

19. Verwendung der Dioxazinverbindungen gemäss Anspruch 1 zum Färben und Bedrucken von basisch färbbaren, modifizierten Polyestermaterialien.

20. Die mit den Dioxazinverbindungen gemäss Anspruch 1 behandelten bzw. gefärbten und bedruckten Materialien.

**Claims**

1. A dioxazine compound of the formula I

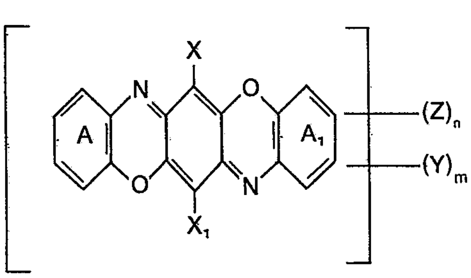

(I)

wherein

Z is a basic group of the formula

a) 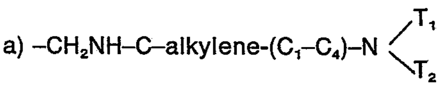 , or

b) 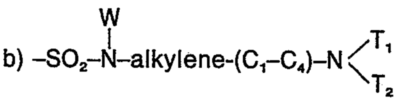 , or

c) 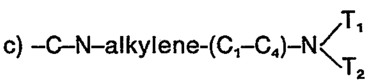 ,

wherein

$T_1$ is H, or a low-molecular alkyl group unsubstituted or substituted by hydroxyl, or a cyclohexyl group unsubstituted or substituted by 1 to 3 methyl groups, or it is a phenyl group;

$T_2$ is a low-molecular alkyl group unsubstituted or substituted by hydroxyl; or

$T_1$ and $T_2$ together with the N atom form a pyrrolidine, piperidine, morpholine or piperazine ring;

W is hydrogen, an unsubstituted alkyl group having 1 to 4 carbon atoms, or an alkyl group ($C_1$–$C_4$) substituted by OH or alkoxy ($C_1$–$C_4$); or

Z is a cationic group of the formula

a) $-CH_2\text{–}NH\text{–}CO\text{–alkylene–}(C_1\text{–}C_4)\text{–}K^{\oplus}$ $A^{\ominus}$

wherein $K^{\oplus}$ is a group of the formula

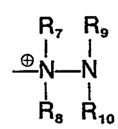 or 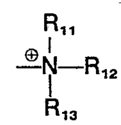

wherein

$R_7$ and $R_8$ independently of one another are each an alkyl group ($C_1$–$C_4$), or a cycloalkyl group, or

$R_7$ and $R_8$ together with the N atom form a heterocyclic ring;

$R_9$ and $R_{10}$ independently of one another are each hydrogen, alkyl ($C_1$–$C_4$) or cycloalkyl, or an acyl group;

$R_{11}$ is unsubstituted or substituted alkyl ($C_1$–$C_4$), cycloalkyl or aryl;

$R_{12}$ is unsubstituted or substituted alkyl ($C_1$–$C_4$), cycloalkyl, alkoxy or aryl;

$R_{13}$ is a $C_1$–$C_2$-alkyl group unsubstituted or substituted by OH, $CONH_2$ or $NH_2$; or

$R_7$ and $R_9$ and/or $R_8$ and $R_{10}$ together with the N atom form a heterocyclic ring; or

$R_{11}$ and $R_{12}$ or $R_{11}$, $R_{12}$ and $R_{13}$ together with the N atom form a heterocyclic ring; or

Z is a cationic group of the formula

b) 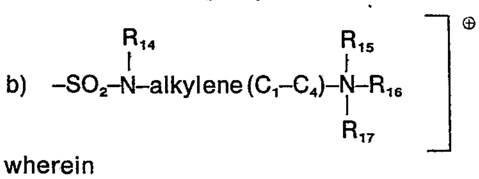 $A^{\ominus}$

wherein

«alkylene» ist an alkylene bridge which can be interrupted

by –O–, –S–, –NH– or –N–
alkyl ($C_1$–$C_4$)

$R_{14}$ is hydrogen or an alkyl group;

$R_{15}$ and $R_{17}$ are each an alkyl group ($C_1$–$C_4$) or a cycloalkyl group;

$R_{16}$ is an alkyl group ($C_1$–$C_4$), a cycloalkyl group, an alkoxy group or an $NH_2$ group; or two of the groups

$R_{15}$, $R_{16}$ and/or $R_{17}$ together with the N atom form a heterocyclic ring; or

Z is a cationic group of the formula

c) 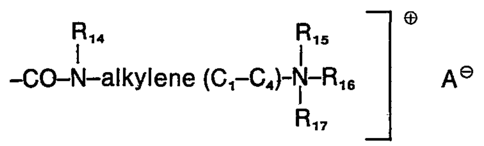

wherein

$R_{14}$ is hydrogen or an alkyl group;

$R_{15}$ and $R_{17}$ are each an alkyl group ($C_1$–$C_4$) or a cycloalkyl group;

$R_{16}$ is an alkyl group ($C_1$–$C_4$), a cycloalkyl group, an alkoxy group or an $NH_2$ group; or two of the groups

$R_{15}$, $R_{16}$ and/or $R_{17}$ together with the N atom form a heterocyclic ring; and wherein

$A^{\ominus}$ is in all cases an anion;

Y is an anionic group;

X and $X_1$ independently of one another are each identical or different substituents from the group: hydrogen, halogen, CN, alkyl ($C_1$–$C_4$), unsubstituted or substituted phenyl, or $NHCOR_1$, wherein $R_1$ is alkyl ($C_1$–$C_4$), cycloalkyl, unsubstituted or substituted aryl, or a heterocyclic group, $OCOR_2$, wherein $R_2$ is unsubstituted or substituted alkyl ($C_1$–$C_4$) or cycloalkyl; or

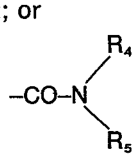

wherein $R_4$ and $R_5$ independently of one another are each: hydrogen, unsubstituted or substituted alkyl ($C_1$–$C_4$), cycloalkyl or aryl, or $R_4$ and $R_5$ together with the N atom form a heterocyclic ring, or

X and $X_1$ are the group $COOR_6$, wherein $R_6$ is hydrogen, unsubstituted or substituted alkyl or cycloalkyl;

n is a number from 1 to 4 inclusive;

m is a number from 0 to 2, with the proviso that the number m is smaller than n, and wherein the benzo groups

A and $A_1$ can be identically or differently, mono- or polysubstituted, and the groups

Z and Y are bound to the benzo groups A and/or $A_1$.

2. A dioxazine compound of the formula I according to Claim 1, wherein Z is a quaternised basic group.

3. A dioxazine compound of the formula I according to Claim 1, wherein n is the number 2 or 3.

4. A dioxazine compound of the formula I according to Claim 1, wherein m is the number 0.

5. A dioxazine compound of the formula I according to Claim 1, wherein X and $X_1$ are identical substituents.

6. A dioxazine compound of the formula I according to Claim 5, wherein X and $X_1$ are each the group $NHCOR_1$, in which $R_1$ is alkyl ($C_1$–$C_4$) or substituted or unsubstituted aryl, or wherein X and $X_1$ are each halogen.

7. A dioxazine compound of the formula I according to Claim 6, wherein X and $X_1$ are each chlorine.

8. A dioxazine compound of the formula I according to Claim 1, wherein the two benzo groups A and $A_1$ are substituted by one or more identical substituents.

9. A dioxazine compound of the formula I according to Claim 1, wherein A and $A_1$ are substituted, apart from by Z and Y, by the following substituents: halogen, CN, unsubstituted or substituted alkyl ($C_1$–$C_8$), unsubstituted or substituted phenyl; $NHCOR_{18}$, in which $R_{18}$ is: unsubstituted or substituted alkyl, alkoxy, cycloalkyl, or unsubstituted or substituted aryl, or $NO_2$, SCN, a heterocyclic ring, an unsubstituted or substituted alkoxy group, an unsubstituted or substituted phenoxy group, the group $NHR_{19}$, in which $R_{19}$ is hydrogen, aryl or a heteroring, or an alkylsulfonyl group and the group $CONHR_{20}$, in which $R_{20}$ is unsubstituted or substituted aryl.

10. A dioxazine compound according to Claim 9, wherein the benzo groups A and $A_1$ are mono- or polysubstituted by Cl, $NHCOC_6H_5$, $NHCOC_6H_4Cl$, $NHCOC_6H_4OCH_3$, alkoxy ($C_1$–$C_3$), alkoxy ($C_1$–$C_3$) substituted by OH or alkoxy or by alkyl, in particular $CH_3$; $-O-C_6H_5$, $-O-C_6H_4-CH_3$, $-C_6H_5$, $-CH_2-C_6H_5$ and –NHCO–alkyl, and especially $-NHCO-C_3H_7$.

11. A dioxazine compound according to Claim 1, wherein Z is a cationic group, n is the number 2 or 3, m is the number 0, X and $X_1$ are each Cl, and A and $A_1$ have identical substituents and are substituted by the substituents given in Claim 10.

12. A process for producing a dioxazine compound of the formula I according to Claim 1, which process comprises

a) introducing a basic group Z, which can be quaternised, into a compound of the formula II

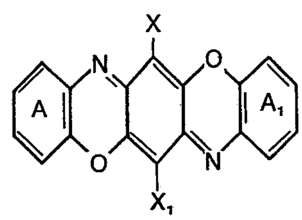

(II)

wherein the symbols A, $A_1$, X and $X_1$ are as defined under the formula I, then, if Y is not present, introducing an anionic group Y if necessary and, if

necessary, quaternising the quaternisable basic group Z with a quaternising agent, or

b) subjecting a compound of the formula III

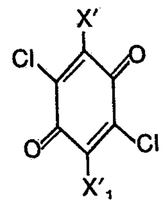

(III)

in which X′ and $X_1$′ CN, to a condensation reaction with at least a mols of a compound $A–NH_2$ and b mols of a compound $A_1–NH_2$, the sum of a and b being at least 2, and the said compounds $A–NH_2$ and $A_1–NH_2$ containing n basic groups Z, which can be quaternisable, or n already quaternised basic groups Z, the reaction proceeding with cyclisation to form a dioxazine compound, quaternising a quaternisable basic group Z, which may be present, with a quaternising agent and, if necessary, introducing an anionic group Y, or subjecting the compound of the formula IIIa

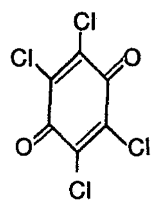

(IIIa)

to a condensation reaction with a mols of $A–NH_2$ and b mols of $A_1–NH_2$, with cyclisation, in accordance with the above instructions, and then replacing the two Cl atoms by CN groups.

13. The use of a dioxazine compound of the formula I according to Claim 1 as a dye for dyeing and printing textile materials, paper and leather, and also for bulkdyeing linear synthetic high-molecular weight polyamides.

14. The use of a dioxazine compound of the formula I according to Claim 1 as a dye for dyeing and printing natural and regenerated cellulose materials, particularly cotton and viscose, without the addition of salt.

15. The use of a dioxazine compound according to Claim 1 for dyeing and printing paper of all types.

16. The use of a dioxazine compound of the formula I for dyeing and printing lignin-free, bleached and unsized paper (tissue).

17. The use of a dioxazine compound according to Claim 1 for dyeing and printing natural polyamide materials, such as wool and silk, or modified polyamide which can be dyed with basic dyes.

18. The use of a dioxazine compound according to Claim 1 for dyeing and printing polyacrylonitrile materials.

19. The use of a dioxazine compound according to Claim 1 for dyeing and printing modified polyester materials which can be dyed with basic dyes.

20. The materials treated or dyed or printed with a dioxazine compound according to Claim 1.

**Revendications**

1. Composés dioxaziniques de formule I:

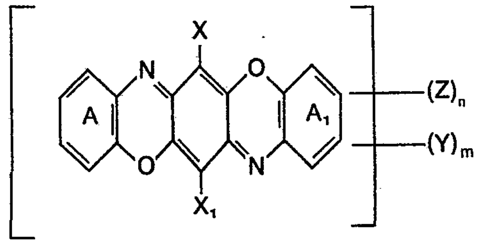

(I)

dans laquelle:

Z désigne soit un groupe basique de formule:

a) 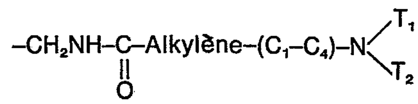

ou

b) 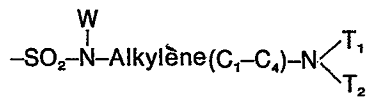

ou

c) 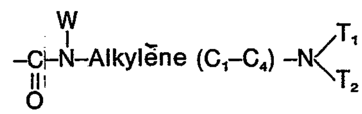

où $T_1$ représente H ou un reste alkyle à bas poids moléculaire, éventuellement substitué par le radical hydroxyle ou un reste cyclohexyle éventuellement substitué par 1 à 3 restes méthyles ou bien un reste phényle;

$T_2$ représente un reste alkyle à bas poids moléculaire, éventuellement substitué par le radical hydroxyle, ou bien les restes $T_1$ et $R_2$ forment ensemble avec l'atome N un noyau pyrrolidine, pipéridine, morpholine ou pipérazine;

W est de l'hydrogène, un groupe alkyle avec 1 à 4 atomes de carbone non substitué ou bien un groupe alkyle ($C_1$–$C_4$) substitué par OH ou le radical alcoxy ($C_1$–$C_4$); soit

Z désigne un groupe cationique de formule:

a) $–CH_2–NH–CO–$alkylène$–(C_1–C_4)–K^{\oplus}$ $A^{\ominus}$

où $K^{\oplus}$ est un reste de formules:

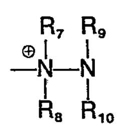 ou 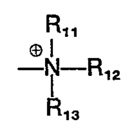

dans lesquelles:

$R_7$ et $R_8$ indépendamment l'un de l'autre représentent chacun un groupe alkyle ($C_1$–$C_4$) ou bien un groupe cycloalkyle, ou bien $R_7$ forme avec $R_8$ en incluant l'atome N un noyau hétérocyclique;

$R_9$ et $R_{10}$ indépendamment l'un de l'autre représentent chacun de l'hydrogène, un reste alkyle ($C_1$–$C_4$) ou cycloalkyle ou bien un groupe acyle;

$R_{11}$ représente un groupe alkyle ($C_1$–$C_4$), cycloalkyle ou aryle, éventuellement substitué;

$R_{12}$ représente un groupe alkyle ($C_1$–$C_4$), cycloalkyle, alcoxy ou aryle, éventuellement substitué;

$R_{13}$ est un reste $C_1$–$C_2$-alkyle éventuellement subs-

titué par OH, $CONH_2$ ou $NH_2$, ou bien $R_7$ et $R_9$ et/ou $R_8$ et $R_{10}$ forment ensemble avec l'atome N un noyau hétérocyclique, ou bien $R_{11}$ et $R_{12}$ ou $R_{11}$, $R_{12}$ et $R_{13}$ forment en incluant l'atome N un noyau hétérocyclique, soit Z désigne un groupe cationique de formule:

b) 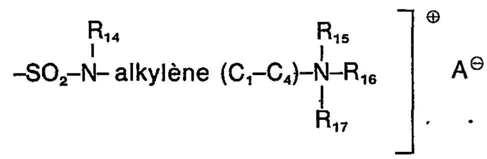

dans laquelle:

le groupe «alkylène» est un pont alkylène qui peut être interrompu par –O–, –S–, –NH– ou 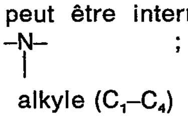;

$R_{14}$ est de l'hydrogène ou un reste alkyle; $R_{15}$ et $R_{17}$ désignent chacun un reste alkyle ($C_1$–$C_4$) ou un reste cycloalkyle; $R_{16}$ est un reste alkyle ($C_1$–$C_4$), un reste cycloalkyle, un reste alcoxy ou un groupe $NH_2$; ou bien deux des restes $R_{15}$, $R_{16}$ et/ou $R_{17}$ forment ensemble avec l'atome d'azote un noyau hétérocyclique; soit Z désigne un groupe cationique de formule:

c) 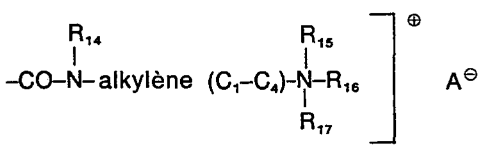

où $R_{14}$ est de l'hydrogène ou un reste alkyle;

$R_{15}$ et $R_{17}$ désignent chacun un reste alkyle ($C_1$–$C_4$) ou un reste cycloalkyle; $R_{16}$ est un reste alkyle ($C_1$–$C_4$), un reste cycloalkyle, un reste alcoxy ou un groupe $NH_2$; ou bien deux des restes $R_{15}$, $R_{16}$ et/ou $R_{17}$ forment ensemble avec l'atome d'azote un noyau hétérocyclique; et où $A^{\ominus}$ représente dans tous les cas un anion;

Y est un groupe anionique;

X et $X_1$ indépendamment l'un de l'autre sont des substituants identiques ou différents parmi les classes hydrogène, halogène, CN, alkyle ($C_1$–$C_4$), phényle éventuellement substitué, $NHCOR_1$ où $R_1$ est un reste alkyle ($C_1$–$C_4$), cycloalkyle, aryle éventuellement substitué, ou un reste hétérocyclique; $OCOR_2$ où $R_2$ est un reste alkyle ($C_1$–$C_4$) ou cycloalkyle éventuellement substitué, ou bien

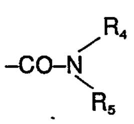 où $R_4$ et $R_5$ indépendamment l'un de l'autre désignent chacun de l'hydrogène, un reste alkyle $C_1$–$C_4$, cycloalkyle ou aryle, éventuellement substitué, ou bien $R_4$ forme ensemble avec $R_5$ en incluant l'atome N un noyau hétérocyclique; ou bien X et $X_1$ désignent le groupe $COOR_6$ où $R_6$ est de l'hydrogène, un reste alkyle ou cycloalkyle, éventuellement substitué;

n est les nombres de 1 à 4 inclus;

m représente les nombres 0 à 2 à la condition que le nombre m soit plus petit que n, et où les restes benzo A et $A_1$ identiques ou différents peuvent être substitués une ou plusieurs fois, et les restes Z et Y sont liés aux restes benzo A et/ou $A_1$.

2. Composés dioxaziniques de formule I selon la revendication 1, caractérisés par le fait que Z représente un groupe basique quaternisé.

3. Composés dioxaziniques de formule I selon la revendication 1, caractérisés par le fait que n désigne les nombres 2 ou 3.

4. Composés dioxaziniques de formule I selon la revendication 1, caractérisés par le fait que m désigne le nombre 0.

5. Composés dioxaziniques de formule I selon la revendication 1, caractérisés par le fait que X et $X_1$ représentent des substituants identiques.

6. Composés dioxaziniques de formule I selon la revendication 5, caractérisés par le fait que X et $X_1$ représentent chacun le groupe $NHCOR_1$ où $R_1$ est un reste alkyle ($C_1$–$C_4$) ou un reste aryle éventuellement substitué, ou bien que X et $X_1$ désignent chacun de l'halogène.

7. Composés dioxaziniques de formule I selon la revendication 6, caractérisés par le fait que X et $X_1$ désignent chacun du chlore.

8. Composés dioxaziniques de formule I selon la revendication 1, caractérisés par le fait que les deux restes benzéniques A et $A_1$ sont substitués d'une façon identique une ou plusieurs fois.

9. Composés dioxaziniques de formule I selon la revendication 1, caractérisés par le fait que A et $A_1$ en dehors d'être substitués par Z et Y comportent les substituants suivants: halogène, CN, alkyle ($C_1$–$C_8$) éventuellement substitué, phényle éventuellement substitué; $NHCOR_{18}$, où $R_{18}$ désigne un reste alkyle, alcoxy, cycloalkyle, éventuellement substitué, aryle éventuellement substitué, $NO_2$, SCN, un noyau hétérocyclique, un groupe alcoxy éventuellement substitué, le groupe phénoxy éventuellement substitué, le groupe $NHR_{19}$, où $R_{19}$ est de l'hydrogène, un groupe aryle ou un hétérocyclique, le groupe alkylsulfonyle et le groupe $CONHR_{20}$, où $R_{20}$ désigne un reste aryle éventuellement substitué.

10. Composés dioxaziniques selon la revendication 9, caractérisés par le fait que les restes benzo A et $A_1$ sont substitués une ou plusieurs fois par Cl, $NHCOC_6H_5$, $NHCOC_6H_4Cl$, $NHCOC_6H_4OCH_3$, alcoxy ($C_1$–$C_3$), alcoxy ($C_1$–$C_3$) substitué par le reste OH ou alcoxy ou par le reste alkyle, surtout $CH_3$; $-O-C_6H_5$, $-O-C_6H_4-CH_3$, $-C_6H_5-$, $-CH_2-C_6H_5$ et –NHCO–alkyle, surtout $-NHCO-C_3H_7$.

11. Composés dioxaziniques selon la revendication 1, caractérisés par le fait que Z est un groupe cationique; n représente les nombres 2 ou 3; m représente le nombre 0; X et $X_1$ désignent chacun Cl, et A et $A_1$ sont substitués d'une façon identique par les substituants indiqués dans la revendication 10.

12. Procédé pour la préparation des composés dioxaziniques de formule I selon la revendication 1, caractérisé par le fait que:

a) dans un composé de formule II:

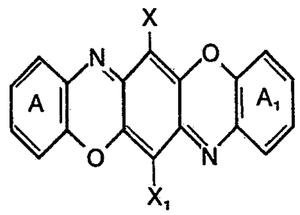

(II)

dans laquelle les symboles A, $A_1$, X et $X_1$ ont les mêmes significations que données sous la formule I, on introduit un groupe basique Z éventuellement quaternisable, puis dans la mesure où Y n'est pas présent, on introduit éventuellement un groupe anionique Y, et on quaternise le groupe basique Z quaternisable éventuellement dans un agent de quaternisation, ou

b) qu'on condense un composé de formule III:

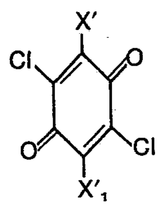

(III)

dans laquelle X' et $X_1$' désignent les mêmes que X et $X_1$, mais non CN, avec au moins a-mole d'un composé $A–NH_2$ et b-mole d'un composé $A_1–NH_2$, la somme de a et b étant au moins de 2, lesquels composés $A–NH_2$ ou $A_1–NH_2$ contiennent n fois un groupe basique Z éventuellement quaternisable ou un groupe basique Z déjà quaternisé, par cyclisation, pour avoir un composé dioxazinique, qu'on quaternise un groupe basique Z quaternisable éventuellement présent avec un agent de quaternisation et qu'on introduit éventuellement un groupe anionique Y ou bien qu'on condense le composé de formule IIIa:

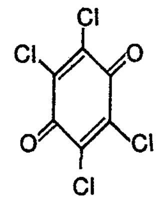

(IIIa)

avec a-mole de $A–NH_2$ ou b-mole de $A_1–HN_2$, par cyclisation, selon les indications ci-dessus, puis qu'on remplace les deux atomes de chlore par des atomes CN.

13. Utilisation des composés dioxaziniques de formule I selon la revendication 1, comme colorants pour teindre et imprimer les matirères textiles, du papier et du cuir, ainsi que pour teindre dans la masse des superpolyamides synthétiques linéaires.

14. Utilisation des composés dioxaziniques de formule I selon la revendication 1, comme colorants pour teindre et imprimer des matières cellulosiques naturelles et régénérées, surtout du coton et de la viscose sans ajouter un sel.

15. Utilisation des composés dioxaziniques selon la revendication 1, pour teindre et imprimer du papier de toutes catégories.

16. Utilisation des composés dioxaziniques selon la revendication 1, pour teindre et imprimer du papier sans lignine, blanchi et non blanchi (papier mousseline).

17. Utilisation des composés dioxaziniques selon la revendication 1, pour teindre et imprimer des matières en polyamide naturelles telles que la laine et la soie ou de polyamide modifié pouvant être teint par voie basique.

18. Utilisation des composés dioxaziniques selon la revendication 1, pour la teinture et l'impression de matières en polyacrylonitrile.

19. Utilisation de composés dioxaziniques selon la revendication 1, pour la teinture et l'impression des matières en polyesters modifiées pouvant être teintes par voie basique.

20. Les matières traitées ou teintes et imprimées avec les composés dioxaziniques selon la revendication 1.